# EUROPÄISCHE PATENTSCHRIFT

(11) **EP 2 199 125 B1**
(45) Veröffentlichungstag und Bekanntmachung des Hinweises auf die Patenterteilung: **26.10.2011**
(21) Anmeldenummer: 09179328.1
(22) Anmeldetag: 15.12.2009
(51) Int. Cl.: B60H 1/00

(54) **Vorrichtung zur Erfassung der Innenraumtemperatur eines Fahrzeuges**
Device for detecting temperature in the passenger compartment of a vehicle
Dispositif de détection de la température dans l'habitacle d'un véhicule

(30) Priorität: 19.12.2008 DE 102008064011
(43) Veröffentlichungstag der Anmeldung: 23.06.2010
(73) Patentinhaber: Behr-Hella Thermocontrol GmbH, 70190 Stuttgart (DE)
(72) Erfinder: Trapp, Ralph, 33102 Paderborn (DE); Nagel, Dirk, 33100 Paderborn (DE); Schmidt, Rüdiger, 33102 Paderborn (DE)
(74) Vertreter: von Kreisler Selting Werner

(56) Entgegenhaltungen:
- EP-A2- 1 457 365
- EP-B1- 1 466 766
- DE-A1-102007 009 672
- DE-A1-102007 015 231
- DE-B3- 10 312 077
- DE-C1- 3 826 329

## Beschreibung

Die Erfindung betrifft eine Vorrichtung zur Erfassung der Innenraumtemperatur eines Fahrzeuges, die insbesondere zur Istwertermittlung einer Innenraumtemperaturregelung eines Fahrzeuges eingesetzt werden kann.

Für die vollautomatische Klimaregelung in einem (Kraft-)Fahrzeug muss die zu regelnde Innenraumtemperatur durch eine Sensorik erfasst werden. Für heutige Kraftfahrzeugkllmatlslerungen existieren unterschiedliche Sensoranordnungen, um die zu regelnde Innenraumtemperatur zu erfassen. Dabei wird zwischen den zwangsbelüfteten und unbelüfteten Fühlern unterschieden. Wegen der geringeren Kosten, der platzsparenden Bauform sowie der längeren Lebensdauer kommen immer häufiger unbelüftete Fühler zum Einsatz, wie sie in DE 103 12 077 B3 und EP 1 466 766 B1 beschrieben sind. Diese Sensoren sind derart konstruiert, dass sei ein thermisches Sensorelement und ein optisches Sensorelement in einem Bauteil vereinen. Dieses integrierte Bauteil wird in einer Öffnung einer an den Fahrzeuginnenraum angrenzenden Wand angeordnet, wo das thermische Element die Lufttemperatur messen soll. Die Störgröße in Form von solarer Einstrahlung wird durch das strahlungssensitive Element erfasst und kann daher kompensiert werden. Eventuelle Störwärme kann durch einen weiteren Temperaturfühler erfasst und kompensiert werden (DE 38 26 329 C1 und EP 1 457 365 A2). Sämtlichen dieser Sensoren gemeinsam ist, dass sie prinzipbedingt einen direkten Kontakt zum Fahrzeuginnenraum benötigen.

DE 10 2007 009 672 A1 zeigt einen Sensor zur Temperaturerfassung, der ein Gehäuse mit zwei integrierten Temperatursensoren und ein Dämmmaterial zwischen den beiden Temperatursensoren aufweist. Durch die räumliche und thermische Trennung der beiden Temperatursensoren sollen anhand von deren Signalen Rückschlüsse auf die zu messende Innenraumtemperatur vor dem Gehäuse gezogen werden können. Eine Auswertung der beiden Temperaturfühler soll auch darüber Aufschluss geben, ob die Sensorik durch solare Strahlung getroffen und somit das Messsignal verfälscht wird. Wird durch eine Piauslbllltätsbetrachtung davon ausgegangen, dass solare Störstrahlung vorliegt, wird das Messsignal zur Regelung nicht weiter verwendet und es wird statt des Messwertes ein theoretischer Ersatzwert aus einer Vielzahl von Größen geschätzt, die durch das Klimasteuergerät zur Verfügung stehen müssen.

DE 10 2007 015 231 offenbart einen sensor nach dem Oberbegriff des Anspruchs 1.

Der Erfindung liegt die Aufgabe zu Grunde, durch eine Sensoranordnung die Innenraumtemperatur eines Kraftfahrzeuges mit hinreichender Genauigkeit zu erfassen, ohne dass die Sensoranordnung in einer Öffnung eines an den Innenraum angrenzenden Wandelements angeordnet werden muss.

Zur Lösung dieser Aufgabe wird mit der Erfindung eine Vorrichtung zur Erfassung der Innenraumtemperatur eines Fahrzeuges, insbesondere für die Innenraumtemperaturregelung eines Fahrzeuges, vorgeschlagen, wobei die Vorrichtung versehen ist mit
- einem geschlossenen Wandelement, das im Einbauzustand im Fahrzeug eine an den Innenraum des Fahrzeuges angrenzende Vorderseite und eine im Einbauzustand dem Innenraum abgewandte Rückseite aufweist, einem hinter dem Wandelement angeordneten ersten Temperatursensor zur Erfassung der Temperatur des Wandelements,
- einem ebenfalls hinter dem Wandelement angeordneten zweiten Temperatursensor, der räumlich getrennt und im wesentlichen thermisch entkoppelt vom ersten Temperatursensor angeordnet und zur Erfassung der Temperaturbeeinflussung des ersten Temperatursensors und/oder des Wandelements durch von zum Wandelement benachbart angeordneten, wärmeabgebenden Komponenten vorgesehen ist,
- einem ebenfalls hinter dem Wandelement angeordneten Strahlungssensor zur Erfassung zumindest eines Teilbereichs des Spektrums der Sonnenstrahlung,
- wobei das Wandelement zumindest In einem Teilbereich für zumindest einen Teil des vom Strahlungssensor erfassbaren Teilbereichs des Spektrums der Sonnenstrahlung durchlässig ist, und
- einer Auswerteeinheit, die mit dem ersten und dem zweiten Temperatursensor und mit dem Strahlungssensor verbunden ist und anhand der Messwerte dieser Sensoren einen Wert für die Innenraumtemperatur ausgibt.

Die erfindungsgemäße Vorrichtung umfasst zwei Temperatursensoren sowie einen Strahlungssensor, bei dem es sich beispielsweise um eine Fotodiode für das sichtbare bzw. unsichtbare Spektrum der Sonnenstrahlung handeln kann. Sämtliche Sensoren sind räumlich und optisch vom Innenraum des Fahrzeuges getrennt angeordnet, und zwar hinter einem an den Innenraum angrenzenden Wandelement, das eine Vorderseite, die dem Innenraum zugewandt Ist, und eine Rückseite aufweist. Die Sensoren sind also an bzw. hinter der Rückseite des Wandelements angeordnet. Bei dem Wandelement kann es sich beispielsweise um die Frontblende des Klimasteuergeräts oder einer anderen Bedieneinheit im Fahrzeuginnenraum handeln. Während der erste Temperatursensor der Erfassung der Temperatur des Wandelements dient, hat der zweite Temperatursensor die Aufgabe, Temperaturbeeinflussungen des ersten Temperatursensors und/oder des Wandelements durch beispielsweise zum Wandelement benachbart angeordnete, wärmeabgebende Komponenten zu erfassen. Damit der Strahlungssensor zumindest einen Teil des Spektrums der Sonnenstrahlung erfasst, ist das Wandelement durch entsprechende Wahl des Materials (beispielsweise Kunststoffmaterial) für einen Teil des vom Strahlungssensor erfassbaren Spektrums der Sonnenstrahlung transparent. Die Ausgangssignale sämtlicher Sensoren werden einer Auswerteeinheit zugeführt, die anhand der Messwerte dieser Sensoren einen Wert für die Innenraumtemperatur ausgibt. Dabei wird das durch die Relativanordnung der beiden Temperatursensoren bedingte thermische Verhältnis berücksichtigt. Auch wird berücksichtigt, wie sich die Sonneneinstrahlung auf die Erwärmung des Wandelements auswirkt. Sämtliche dieser Berechnungen gehen aus einer thermischen Modellierung des Sensoraufbaus und seines Einbaus hinter dem Wandelement hervor. Außerdem gehen die Ergebnisse empirischer Untersuchungen ein.

Der Vorteil der erfindungsgemäßen Sensoranordnung besteht darin, dass diese Sensoranordnung keinen direkten Kontakt zum Fahrzeuginnenraum benötigt, womit Durchbrechungen bzw. Öffnungen in beispielsweise der Klimasteuergerätefrontblende nicht erforderlich sind. Dies bietet weitreichende Freiheiten beim Design. Störungen der Temperaturmessung durch beispielsweise solare Strahlung werden bezüglich ihrer Intensität erfasst, um diese Störungen entsprechend kompensieren zu können. Thermische Störeinflüsse von hinter dem Wandelement angeordneten, wärmeabgebenden Komponenten werden ebenfalls erfasst und kompensiert.

Wie bereits oben erwähnt, sind die beiden Temperatursensoren hinter dem Wandelement räumlich voneinander getrennt und im wesentlichen thermisch entkoppelt angeordnet. Dennoch besteht zwischen beiden Sensoren ein thermischer Zusammenhang, der, wie oben ebenfalls beschrieben, zur Ermittlung der Innenraumtemperatur unter Kompensation von thermischen Störgrößen berücksichtigt wird.

Der erste Temperatursensor dient der Erfassung der Temperatur des Wandelements und ist daher zweckmäßigerweise direkt an der Rückseite des Wandelements angeordnet. In unmittelbarer Nachbarschaft zum ersten Temperatursensor ist zweckmäßigerweise der Strahlungssensor angeordnet. Der Strahlungssensor kann ebenfalls direkt an der Rückseite des Wandelements angeordnet sein.

In weiterer vorteilhafter Ausgestaltung der Erfindung ist vorgesehen, dass die beiden Sensoren und insbesondere auch der Strahlungssensor auf einem gemeinsamen Trägerelement angeordnet sind.

Zur weiteren Kompensation externer thermischer Störeinflüsse ist es von Vorteil, wenn derjenige Wandteil des Wandelements, hinter dem sich die Sensoranordnung befindet, thermisch entkoppelt zum übrigen Wandteil des Wandelements ist. Diese thermische Entkopplung der beiden Wandteile kann beispielsweise durch eine gezielte Ausdünnung der Wanddicke des Wandelements realisiert werden. Dies kann beispielsweise mit Vorteil dadurch erreicht werden, dass die Rückseite des Wandelements eine umlaufende Nut zur Reduzierung der Wanddicke des Wandelements an der Verbindung zwischen dem von der Nut begrenzten (zweiten) Wandteil zum (ersten) Wandteil des Wandelements aufweist.

Eine weitere Möglichkeit der thermischen Entkopplung beider Wandteile besteht in der Schaffung eines (durchgehenden) Zwischenraums zwischen der Vorder- und der Rückseite des Wandelements. Hier bietet es sich an, die Sensoranordnung beispielsweise an einem Tastenkörper oder einem Teil davon anzuordnen, wobei der Tastenkörper beispielsweise Bestandteil des Klimasteuergeräts sein kann. Wenn die Sensoren an einem Kunststoffträgerelement, wie beispielsweise dem Tastenkörper angeordnet sind, so kann die elektrische Verbindung der Sensoren zur Auswerteeinheit zumindest teilweise durch Leiterbahnen realisiert werden, die an dem Kunststoff-Trägerelement angebracht sind, wie sich dies beispielsweise mit der sogenannten MID-Technologie herstellen lässt.

Die Erfindung wird nachfolgend anhand zweier Ausführungsbeispiele unter Bezugnahme auf die Zeichnung näher erläutert. Im Einzelnen zeigen dabei schematisch:
- Fig. 1: den Aufbau einer Sensoranordnung hinter einer geschlossenen Front- blende gemäß einem ersten Ausführungsbeispiel der Erfindung und
- Fig. 2: den Aufbau einer Sensoranordnung innerhalb einer Taste bzw. einer Tastennachbildung einer Frontblende.

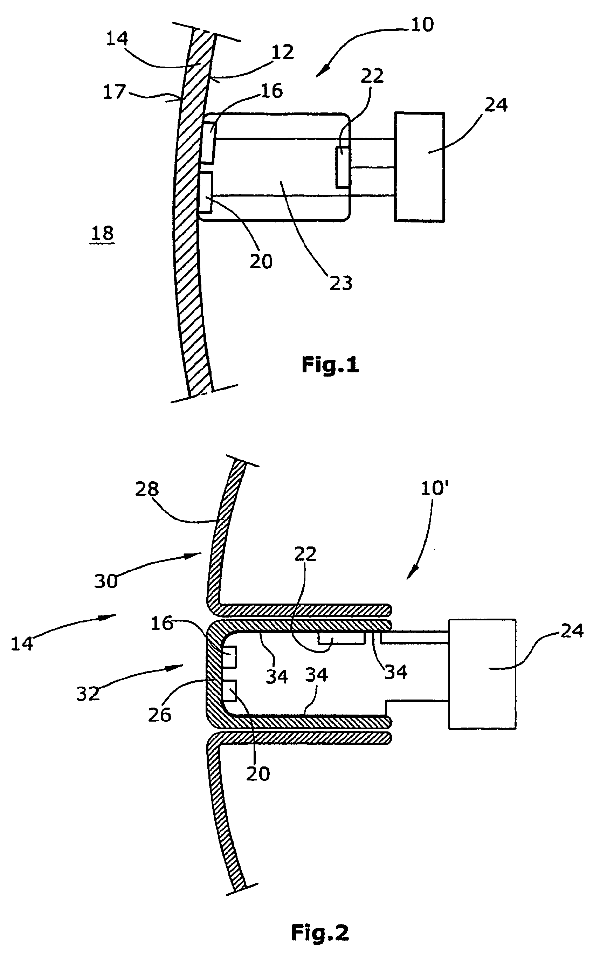

Bei dem Ausführungsbeispiel der Sensoranordnung 10 gemäß Fig. 1 ist an der Rückseite 12 eines Wandelements 14, bei dem es sich beispielsweise um die Frontblende des Klimasteuergeräts handelt, ein erster Temperatursensor 16 angeordnet. Die der Rückseite 12 des Wandelements 14 abgewandte Vorderseite 17 ist dem Innenraum 18 des Fahrzeuges zugewandt. An der Rückseite 12 des Wandelements 14 befindet sich ferner ein Strahlungssensor 20 zur Erfassung solarer Strahlung. Der Strahlungssensor 20 befindet sich nahe dem ersten Temperatursensor 16.

Räumlich und thermisch getrennt vom ersten Temperatursensor 16 weist die Sensoranordnung 10 einen zweiten Temperatursensor 22 auf, wobei sich zwischen beiden Temperatursensoren 16,22 im wesentlichen lediglich Luft und insbesondere keine wie auch immer gearteten Werkstoffe befinden. Alle drei Sensoren können auf einer Trägerplatte 23 angeordnet sein und sind mit einer Auswerteeinheit 24 verbunden.

Bei dem Ausführungsbeispiel gemäß Fig. 2 Ist eine erfindungsgemäße Sensoranordnung 10' in einem Tastenkörper 26 der Frontblende 28 des Klimasteuergeräts untergebracht. Die Frontblende 28 bildet dabei ein erstes Wandteil 30 des Wandelements 14, das mit der Front des Tastenkörpers 26 ein zweites Wandteil 32 aufweist. Sofern die einzelnen Bestandteile der Sensoranordnung 10' gemäß Fig. 2 denen der Sensoranordnung 10 nach Fig. 1 entsprechen, sind sie in den Figuren mit den gleichen Bezugszeichen versehen. Im Ausführungsbeispiel gemäß Fig. 2 erfolgt die elektrische Verbindung der Sensoren mit der Auswerteeinheit 24 zumindest teilweise über in MID-Technologie am Tastenkörper 26 ausgebildete Leiterbahnen 34.

Wie sich aus der vorstehenden Beschreibung ergibt, befindet sich also bei der erfindungsgemäßen Sensoranordnung 10 bzw. 10' der erste Temperatursensor 16, der die Temperatur des Wandelements 14 erfasst, an der Rückseite dieses Wandelements 14. Der zweite Temperatursensor 22 ist baulich und thermisch vom ersten Temperatursensor 16 getrennt und ebenfalls im innern des Klimasteuergeräts untergebracht. Beide Temperatursensoren 16,22 stehen in einem bekannten thermischen Verhältnis zueinander, obwohl sie soweit wie möglich thermisch voneinander entkoppelt sind. Durch eine thermische Modellierung dieses Sensoraufbaus kann die Temperatur im Bereich vor dem Wandelement 14, also im Fahrzeuginnenraum, berechnet werden. Zur Erfassung solarer Strahlung wird nahe dem ersten Temperatursensor 16 der Strahlungssensor 20 angeordnet. Dieser Strahlungssensor 20 befindet sich damit ebenfalls auf der Innenseite des Wandelements 14. Damit sollte derjenige Bereich des Wandelements 14, hinter dem der Strahlungssensor 20 angeordnet ist, zumindest für denjenigen Teil des Sonnenspektrums durchlässig sein, für den der Strahlungssensor 20 sensitiv ist. Die Dämpfung der Sonnenstrahlung durch das Wandelement 14 ist konstant und kann herausgerechnet werden. Durch diesen zusätzlichen Strahlungssensor 20 ist die Sensoranordnung 10,10' in der Lage, auch im Fall von direkter solarer Strahlung auf das Wandelement 14 einen hinreichend genauen Wert für die Innenraumtemperatur zu ermitteln.

### BEZUGSZEICHENLISTE

- 10: Sensoranordnung
- 10': Sensoranordnung
- 12: Rückseite des Wandelements
- 14: Wandelement
- 16: erste Temperatursensor
- 17: Vorderseite des Wandelements
- 18: Innenraum
- 20: Strahlungssensor
- 22: zweiten Temperatursensor
- 23: Trägerplatte
- 24: Auswerteeinheit
- 26: Tastenkörper
- 28: Frontblende
- 30: erste Wandteil
- 32: zweites Wandteil
- 34: Leiterbahnen

## Patentansprüche

1. Vorrichtung zur Erfassung der Innenraumtemperatur eines Fahrzeuges, insbesondere für die Innenraumtemperaturregelung eines Fahrzeuges, mit
- einem geschlossenen Wandelement (14), das im Einbauzustand im Fahrzeug eine an den Innenraum (18) des Fahrzeuges angrenzende Vorderseite (17) und eine im Einbauzustand dem Innenraum (18) abgewandte Rückseite (12) aufweist,
- einem hinter dem Wandelement (14) angeordneten ersten Temperatursensor (16) zur Erfassung der Temperatur des Wandelements (14),
- einem ebenfalls hinter dem Wandelement (14) angeordneten zweiten Temperatursensor (22), der räumlich getrennt und im wesentlichen thermisch entkoppelt vom ersten Temperatursensor (16) angeordnet und zur Erfassung der Temperaturbeeinflussung des ersten Temperatursensors (16) und/oder des Wandelements (14) durch von zum Wandelement (14) benachbart angeordneten, wärmeabgebenden Komponenten vorgesehen ist, **gekennzeichnet durch**
- einen ebenfalls hinter dem Wandelement (14) angeordneten Strahlungssensor (20) zur Erfassung zumindest eines Teilbereichs des Spektrums der Sonnenstrahlung,
- wobei das Wandelement (14) zumindest in einem Teilbereich für zumindest einen Teil des vom Strahlungssensor (20) erfassbaren Teilbereichs des Spektrums der Sonnenstrahlung durchlässig ist, und
- eine Auswerteeinheit (24), die mit dem ersten und dem zweiten Temperatursensor (16,22) und mit dem Strahlungssensor (20) verbunden ist und anhand der Messwerte dieser Sensoren (16,20,22) einen Wert für die Innenraumtemperatur ausgibt.

2. Vorrichtung nach Anspruch 1, **dadurch gekennzeichnet, dass** der erste Temperatursensor (16) an der Rückseite (12) des Wandelements (14) angeordnet ist.

3. Vorrichtung nach Anspruch 1 oder 2, **dadurch gekennzeichnet, dass** der Strahlungssensor (20) neben dem ersten Temperatursensor (16) angeordnet ist.

4. Vorrichtung nach einem der Ansprüche 1 bis 3, **dadurch gekennzeichnet, dass** der Strahlungssensor (20) an der Rückseite (12) des Wandelements (14) angeordnet ist.

5. Vorrichtung nach einem der Ansprüche 1 bis 4, **dadurch gekennzeichnet, dass** die beiden Temperatursensoren (16,22) auf einem gemeinsamen Trägerelement (23) angeordnet sind.

6. Vorrichtung nach einem der Ansprüche 1 bis 5, **dadurch gekennzeichnet, dass** das Wandelement (14) ein erstes Wandteil (30) und ein zweites Wandteil (32) aufweist, die beide sowohl die Vorder- als auch die Rückseite (17,12) des Wandelements (14) definieren, dass das zweite Wandteil (32) gegenüber dem ersten Wandteil (30) thermisch entkoppelt ist und dass die Temperatursensoren (16,22) und der Strahlungssensor (20) im Bereich hinter dem zweiten Wandteil (32) angeordnet sind.

7. Vorrichtung nach Anspruch 6, **dadurch gekennzeichnet, dass** das zweite Wandteil (32) gegenüber dem ersten Wandteil (30) durch einen Zwischenraum getrennt ist.

8. Vorrichtung nach Anspruch 6 oder 7, **dadurch gekennzeichnet, dass** das zweite Wandteil (32) als Tastenkörper (26) oder Teil eines Tastenkörpers (26) ausgebildet ist, in dem die beiden Temperatursensoren (16,22) und der Strahlungssensor (20) angeordnet sind.

9. Vorrichtung nach den Ansprüchen 5 und 8 oder nach den Ansprüchen 5 und 8 und einem weiteren der vorhergehenden Ansprüche, soweit dieser auf Anspruch 5'eser 8Irückbezogen ist, **dadurch gekennzeichnet, dass** das Trägerelement der Tastenkörper (26) oder ein Teil des Tastenkörpers (26) ist.

10. Vorrichtung nach Anspruch 9, **dadurch gekennzeichnet, dass** zur elektrischen Verbindung der Sensoren (16,20,22) mit der Auswerteeinheit (24) an dem Tastenkörper (26) angebrachte Leiterbahnen (34), insbesondere in MID-Technologie hergestellt, vorgesehen sind.

## Claims

1. A device for detecting the temperature inside the interior of a vehicle, in particular for controlling the temperature in the interior of a vehicle, comprising
- a closed wall element (14) which, when mounted in the vehicle, has a front face (17) adjacent the interior (18) of the vehicle and, in the mounted state, a rear face (12) averted from the interior (18),
- a first temperature sensor (16) arranged behind the wall element (14) for detecting the temperature of the wall element (14),
- a second temperature sensor (22) also arranged behind the wall element (14), wherein said temperature sensor is spatially separated and substantially thermally decoupled from the first temperature sensor (16) and is provided for detecting the influence heat emitting components arranged adjacent the wall element (14) have on the temperature detected by the first temperature sensor (16) and/or the wall element (14),
**characterized by**
- a radiation sensor (20) also arranged behind the wall element (14) for the detection of at least a partial range of the spectrum of solar radiation,
- at least a portion of said wall element (14) being permeable to at least a part of the partial range of the spectrum of solar radiation detectable by the radiation sensor (20), and
- an evaluation unit (24) connected to the first and the second temperature sensor (16, 22) and to the radiation sensor (20) and outputting an interior temperature value based on the measured values of these sensors (16, 20, 22).

2. The device of claim 1, **characterized in that** the first temperature sensor (16) is provided on the rear face (12) of the wall element (14).

3. The device of claim 1 or 2, **characterized in that** the radiation sensor (20) is arranged beside the first temperature sensor (16).

4. The device of one of claims 1 to 3, **characterized in that** the radiation sensor (20) is provided on the rear face (12) of the wall element (14).

5. The device of one of claims 1 to 4, **characterized in that** the two temperature sensors (16, 22) are arranged on a common support member (23).

6. The device of one of claims 1 to 5, **characterized in that** the wall element (14) comprises a first wall part (30) and a second wall part (32) that define both the front and the rear face (17, 12) of the wall element (14), that the second wall part (32) is thermally decoupled from the first wall part (30), and that the temperature sensors (16, 22) and the radiation sensor (20) are arranged in the area behind the second wall part (32).

7. The device of claim 6, **characterized in that** the second wall part (32) is separated from the first wall part (30) by a gap.

8. The device of claim 6 or 7, **characterized in that** the second wall part (32) is designed as a key body (26) or a part of a key body (26) in which the two temperature sensors (16, 22) and the radiation sensor (20) are arranged.

9. The device of claims 5 and 8 or claims 5 and 8 and another one of the preceding claims as far as it refers to claim 5, **characterized in that** the support member is the key body (26) or a part of the key body (26).

10. The device of claim 9, **characterized in that** conductor paths (34), in particular made using MID technology, are provided on the key body (26) for the electrical connection of the sensors (16, 20, 22) with the evaluation unit (24).

## Revendications

1. Dispositif de détection de la température dans l'intérieur d'un véhicule, notamment pour la régulation de la température dans l'intérieur d'un véhicule, comprenant
- un élément de paroi (14) fermé, qui, en état assemblé dans le véhicule, présente une face avant (17) avoisinant ledit intérieur (18) du véhicule et une face arrière (12), qui, en état assemblé, est détournée dudit intérieur (18),
- un premier capteur de température (16) disposé derrière ledit élément de paroi (14) pour détecter la température dudit élément de paroi (14),
- un deuxième capteur de température (22) qui est aussi disposé derrière ledit élément de paroi (14) d'une manière spatialement séparé et sensiblement thermiquement découplé dudit premier capteur de température (16), et qui est prévu pour détecter l'influence de composants radiant chaleur, avoisinant ledit élément de paroi (14), sur la température détectée par ledit premier capteur de température (16) et/ou sur ledit élément de paroi (14),
**caractérisé par**
- un capteur de radiation (20), qui est aussi disposé derrière ledit élément de paroi (14), pour détecter au moins une partie du spectre de la radiation solaire,
- ledit élément de paroi (14) étant perméable dans au moins une région à au moins une partie de ladite partie du spectre de radiation solaire détectable par ledit capteur de radiation (20), et
- une unité d'évaluation (24) connectée au premier et au deuxième capteur de température (16, 22) et au capteur de radiation (20), et qui fait sortir une valeur de la température de l'intérieur sur base des valeurs mesurées de ces capteurs (16, 20, 22).

2. Dispositif selon la revendication 1, **caractérisé en ce que** ledit premier capteur de température (16) est disposé sur la face arrière (12) dudit élément de paroi (14).

3. Dispositif selon les revendications 1 ou 2, **caractérisé en ce que** ledit capteur de radiation (20) est disposé à côté dudit premier capteur de température (16).

4. Dispositif selon l'une des revendications 1 à 3, **caractérisé en ce que** ledit capteur de radiation (20) est disposé sur la face arrière (12) dudit élément de paroi (14).

5. Dispositif selon l'une des revendications 1 à 4, **caractérisé en ce que** les deux capteurs de température (16, 22) sont disposés sur un élément de support (23) commun.

6. Dispositif selon l'une des revendications 1 à 5, **caractérisé en ce que** ledit élément de paroi (14) comprend une première partie de paroi (30) et une deuxième partie de paroi (32), les deux définissant la face avant et la face arrière (17, 12) dudit élément de paroi (14), que ladite deuxième partie de paroi (32) est thermiquement découplée par rapport à la première partie de paroi (30), et que les capteurs de température (16, 22) et ledit capteur de radiation (20) sont disposés dans la région derrière ladite deuxième partie de paroi (32).

7. Dispositif selon la revendication 6, **caractérisé en ce que** ladite deuxième partie de paroi (32) est séparée de ladite première partie de paroi (30) par un interstice.

8. Dispositif selon les revendications 6 ou 7, **caractérisé en ce que** ladite partie de paroi (32) est configurée comme un corps de touche (26) ou une partie d'un corps de touche (26) dans lequel sont disposés les deux capteurs de température (16, 22) et ledit capteur de radiation (20).

9. Dispositif selon les revendications 5 et 8 ou selon les revendications 5 et 8 et une autre revendication se référant à la revendication 5, **caractérisé en ce que** ledit élément de support est formé par ledit corps de touche (26) ou une partie du corps de touche (26).

10. Dispositif selon la revendication 9, **caractérisé en ce que** des pistes conductrices (34) sont prévues, qui sont formées, notamment par technologie MID, sur ledit corps de touche (26) pour la connexion électrique des capteurs (16, 20, 22) à ladite unité d'évaluation (24).
